Europäisches Patentamt

(19) European Patent Office

Office européen des brevets

(11) Publication number: **0 076 114**
**B1**

(12) **EUROPEAN PATENT SPECIFICATION**

(45) Date of publication of patent specification: **27.05.87**

(21) Application number: **82305046.3**

(22) Date of filing: **24.09.82**

(51) Int. Cl.⁴: **B 65 G 27/08,** B 65 G 27/22

(54) Vibratory conveyors.

(30) Priority: **24.09.81 JP 142238/81**

(43) Date of publication of application:
**06.04.83 Bulletin 83/14**

(45) Publication of the grant of the patent:
**27.05.87 Bulletin 87/22**

(84) Designated Contracting States:
**DE FR GB IT**

(56) References cited:
**FR-A-1 597 489**
**GB-A-1 072 963**
**US-A-2 997 158**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Kakita, Yukio**
**326-78 Bodaiji Kousei-cho**
**Kouga-gun Shiga (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Courier Press, Leamington Spa, England.

## Description

This invention relates to vibratory conveyors, for example to a supply trough used in weighing apparatus to effect transport of articles (which term includes pulverulent material) to be weighed by the apparatus.

Such a conveyor may be used in general for receiving an article or articles from one unit and transferring said article or articles to another unit upon request.

By way of an illustrative example, supply troughs are used in a computerized combinatorial weighing apparatus for conveying articles to be weighed to weighing hoppers. Transport of the articles supplied to the supply trough is effected by vibration of the trough proper brought about by suitable vibration means. Heretofore, induction coils have been used as such vibration means as shown, for example, in US—A—3 087 603. However, such practice can have the disadvantage that the trough proper cannot be cleaned easily.

In this type of supply trough, articles may remain affixed to the transport surface of the trough, thus interfering with smooth transport or resulting in other problems. It is therefore desirable to clean the trough frequently by washing with water. In the case of the conventional supply trough mentioned above, however, water sprinkled on the induction coil vibrator may cause electrical problems or leakage. Therefore, it is necessary to remove the trough proper, for each washing, by a troublesome and time-consuming operation.

It is desirable to provide such a conveyor having a supply trough which can be cleaned more easily, and in particular can be washed with water whilst the trough proper remains in its operative position. This could also serve to shorten the time needed for cleaning of the trough proper.

The conventional supply trough mentioned above is mounted on a mounting base through the intermediary of leaf springs. Since the mounting base itself is supported on resilient pads, it will be appreciated that some of the vibratory energy supplied by the vibration means is wastefully communicated to the mounting base.

According to the present invention there is provided a vibratory conveyor, comprising a mounting base supported on a stationary portion by resilient means, a supply trough mounted on the mounting base so as to be capable of vibratory movement with respect thereto, and a vibrator operable to impose such movements on the trough so as to promote movement therealong of articles carried by the trough when it is in use, characterised in that the vibrator is pneumatically operated and is secured to the trough, which is attached to the base through the intermediary of dampers for inhibiting transmission of vibrations from the vibrator to the base.

Reference will now be made, by way of example, to the accompanying drawings, in which:

Figure 1 is a partially cut-away side elevation showing diagrammatically a computerized combinatorial weighing apparatus in which embodiments of the present invention can advantageously be employed;

Figure 2 shows, to a larger scale, a diagrammatic side elevation of a previously proposed form of vibratory conveyor;

Figure 3 is a diagrammatic side elevation showing a vibratory conveyor embodying the present invention; and

Figure 4 is a side elevation, to a still larger scale and partly in section, of a component of the conveyor of Figure 3.

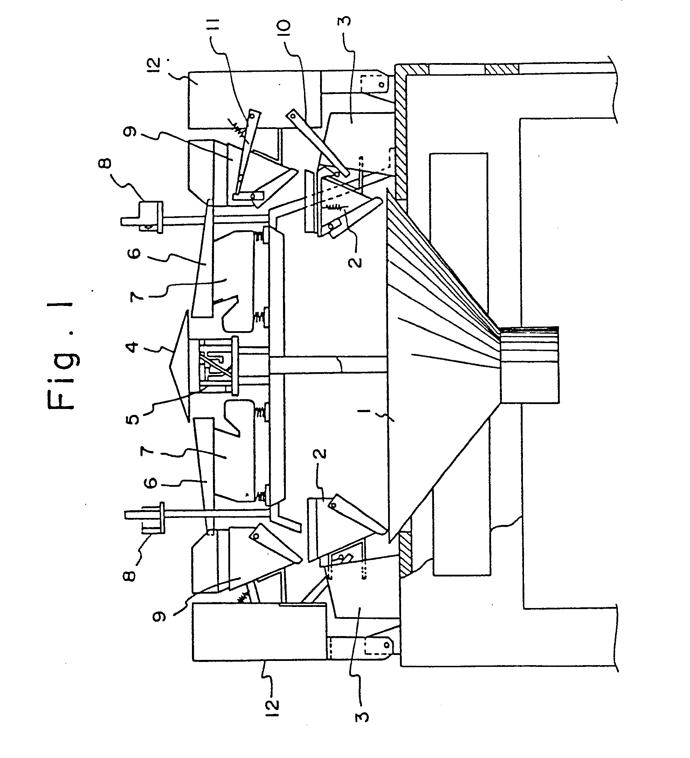

Fig. 1 shows in side elevation a computerized combinatorial weighing apparatus of a type in which vibratory conveyors (supply troughs) embodying this invention can be used to good effect.

In this computerized combinatorial weighing apparatus, a plurality of weighing hoppers 2 are mounted in a circular array above the circumference of the top opening of a collecting chute 1. Each weighing hopper 2 is operatively associated with a weighing machine 3 designed to weigh out articles contained in the weighing hopper 2. A distribution table 4 is supported on an electromagnetically operated vibrator 5 and is set into helical reciprocating rotation. Supply troughs 6 extend radially from near the outer periphery of the distribution table 4. Sensors 8 are used for optically sensing the quantity of the articles on the distribution table 4. A pool hopper 9 is provided between each weighing hopper 2 and the supply trough associated therewith. Each weighing hopper 2 and the pool hopper 9 associated therewith are provided with a drive unit 12 and levers 10, 11 adapted for opening and closing the hoppers 2, 9.

The computerized combinatorial weighing apparatus constructed operates as follows.

The articles are supplied from the distribution table 4 through supply troughs 6 into pool hoppers 9 and thence into weighing hoppers 2. The articles thus received in the weighing hoppers 2 are weighed by the weighing machines 3 associated therewith. Based on the weights measured by the weighing machines 3, a control unit, not shown, of the computerized combinatorial weighing apparatus performs a combinatorial weighing operation by comparing the result of each combinatorial adding operation performed on the article weights with a preset target weight and selecting the combination of articles, known as the best combination, that gives a total weight equal to the target weight or closest to the target weight. In this case, the number of articles in the combination may be arbitrary or predetermined, as desired. The control unit then operates to open the thus selected weighing hoppers 2 by the operation of the levers 10, 11 so that the articles giving said best combination are released into the collecting chute 1 from the weighing hoppers 2 to be discharged towards a packaging machine or a bucket conveyor, not shown. This will leave the selected weighing hoppers 2 empty. Articles are then newly delivered from the corresponding pool hoppers 9 into said weighing hoppers 2, leaving these pool hoppers 9 empty, whereupon a new supply of articles is delivered from the distribution table 4 and the corresponding supply troughs 6. The weighing operation can be continued in this manner by repeating the foregoing steps.

In the computerized combinatorial weighing apparatus, mentioned above, the articles supplied from the distribution table 4 are received in the supply troughs 6 and selected ones of said troughs are vibrated by electromagnetically operated vibrators 7 for transporting the articles along the corresponding supply troughs 6 into the corresponding pool hoppers 9.

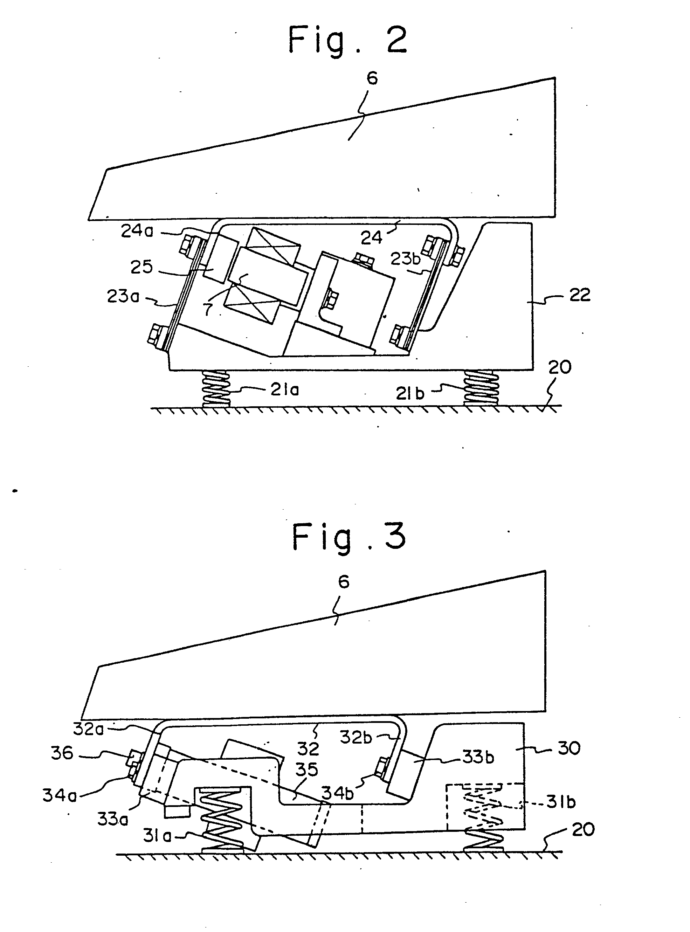

Fig. 2 shows a supply trough assembly of a previously proposed form. In this prior form of supply trough assembly, a mounting base 22 is resiliently mounted on a stationary portion 20 of the weighing apparatus by means of resilient elements 21a, 21b such as coil springs having a comparatively large spring constant. The trough 6 is channel-shaped and supported through a metallic fitting 24 by means of spring plates 23a, 23b mounted in an inclined attitude to front and rear portions of the mounting base 22. An induction coil 7 is secured to the base 22 and may be energized intermittently. A magnetic armature 25 is secured to a bent portion 24a of the fitting 24 so as to be integrated with the spring plate 23a and to face the induction coil 7. When the current is supplied intermittently to the coil 7, the armature 25 is attracted intermittently towards the coil 26 due to elastic deformation of the spring plates 23a, 23b. Thus the trough 6 is set into vibration with the left-hand side extremity of the trough, when viewed in Fig. 2, being pitched downwardly during vibration owing to the arrangement of the plate springs 23a, 23b and fitting 24. As a result of such vibration, the articles placed on the trough may be transported forwardly, or from right to left in Fig. 2.

In the prior form of supply trough, mentioned above, certain difficulties are encountered in cleaning the transport surface of the supply trough 6, and vibratory energy tends to be wasted, both as mentioned above.

Fig. 3 shows a supply trough according to a preferred embodiment of the present invention. In this Figure, like numerals are used to designate similar or like parts shown in Fig. 2.

Referring to Fig. 3, a mounting base 30 is resiliently supported on a stationary portion 20 of the computerized combinatorial weighing apparatus by the medium of resilient elements 31a, 31b, such as coil springs. A metallic mounting fitting 32 is formed at both ends with bent portions 32a, 32b, to which rubber dampers 33a, 33b are secured by bolts 34a, 34b, respectively. The rubber damper 33a is secured to a forward portion of the mounting base 30, while the rubber damper 33b is secured to a rear portion of the mounting base 30. The trough 6 is formed as a channel with an opening at the forward end and is suitably secured to the metallic mounting fitting 32. A pneumatic vibrator 35 is mounted integrally by bolts 36 to the forward bent portion 32a of the fitting 32 and is used as a source for vibrating the supply trough.

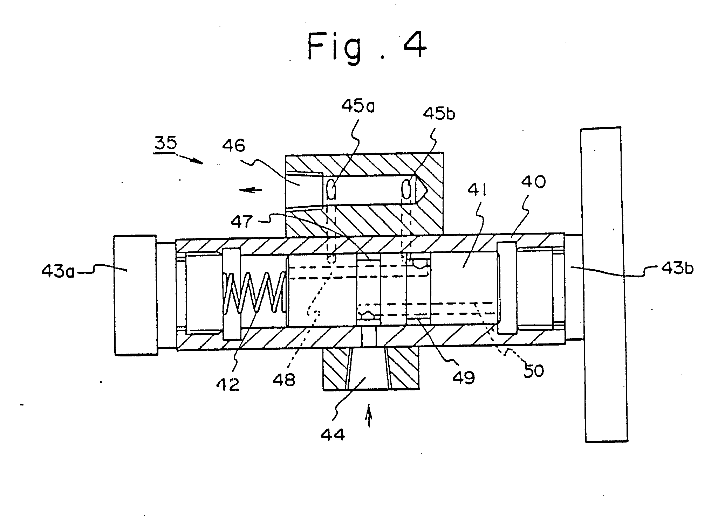

Referring to Fig. 4, the pneumatic vibrator 35 is formed by a hollow cylinder 40, a piston 41 slidable in the cylinder 40, a spring 42 for urging the piston 41 to a predetermined position when air is not supplied to the piston 41, and flanges 43a, 43b delimiting the extreme ends of the cylinder 40. The cylinder has an air suction port 44, air dosage ports 45a, 45b and an air discharge port 46. The piston 41 has an offset bore 50 opening at the end face of the piston towards the right-hand end of the cylinder 40 for communicating with an air chamber defined between the piston 41 and the flange 43b. The piston 41 is also provided with an annular groove 47 communicating with the offset bore 50, another offset bore 48 and another annular groove 49 communicating with the bore 48, which is opened at the end face of the piston towards the left-hand end of the cylinder 40 for communicating with an air chamber defined between the piston 41 and the flange 43a. The coil spring 42 is mounted in the air chamber defined between piston 41 and flange 43a. The arrangement is such that, when the piston 41 is moved to the right in the cylinder 40, the groove 47 communicates with air suction port 44 while the groove 49 communicates with air discharge port 46 through air dosage port 45b, and that, when the piston 41 is moved to the left in the cylinder 40, the groove 47 communicates with air discharge port 46 through air dosage port 45a while the groove 49 communicates with air suction port 44.

In operation, with the various portions of the vibrator in the relative positions shown in Fig. 4, air is supplied through air suction port 44 from air supply means, not shown. The air is supplied under pressure through groove 47 and bore 50 to the air chamber at the right-hand side of the cylinder 40, thus displacing the piston 41 to the left. At this time, the air accumulated in the left-hand side air chamber of the cylinder 40 is vented to the atmosphere through offset bore 48, groove 49, dosage port 45b and discharge port 46. When the piston 41 is displaced to the left, air supplied through suction port 44 is supplied under pressure through groove 49 and offset bore 48 to the left-hand side chamber of the cylinder 41 for displacing the piston 41 to the right. The air accumulated in the right-hand side air chamber of the cylinder 40 is vented to the atmosphere through offset bore 50, groove 47, air dosage port 45a and discharge port 46. In this manner, when the air is supplied through suction port 44, the piston 41 is caused to reciprocate slidably in the cylinder 40 so that the vibrator is subjected to vibration owing to the resulting reaction force.

In the operation of the supply trough shown in Fig. 3, upon actuation of the pneumatic vibrator 35, vibration is transmitted therefrom to the trough 6 through the metallic fitting 32. The articles on the trough 6 are transported towards the front or left-hand side in Fig. 4 under the effect of such vibration. Transmission of the vibration generated by the pneumatic vibrator 35 towards the mounting base 30 is inhibited by the rubber dampers 33a, 33b, so that the base 30 is not subjected to unnecessary vibration, virtually all of the vibration generated by the vibrator being transmitted to the trough 6.

Since the fitting 32 is mounted by rubber dampers 33a, 33b, the supply trough can be made compact in size and reduced in overall height so that the height to the weighing hoppers may be reduced to minimize damage to the articles.

Such a form of construction, with the use of the pneumatic vibrator as the source of vibratory motion, makes it practicable to wash the troughs mounted in position on the combinatorial weighing apparatus. The troughs can be cleaned easily in a shorter period of time. Washing with water may be effected without special precautions, this being facilitated by the use of simple rubber dampers as described.

It will be appreciated that such rubber dampers, whereby the mounting fitting is secured to the mounting base, can serve to protect the mounting base from the powerful vibration generated by the pneumatic vibrator, which vibration is practically all transmitted to the trough so as to be used for the transport operation of the trough. Compact construction of the supply trough assembly is also facilitated by the use of such rubber dampers. The force of vibration can be adjusted easily by adjusting the supply air pressure and, hence, set to an optimum value for resonant vibration of the supply trough.

## Claims

1. A vibratory conveyor, comprising a mounting base (30) supported on a stationary portion (20) by resilient means (31), a supply trough (6) mounted on the mounting base so as to be capable of vibratory movement with respect thereto, and a vibrator operable to impose such movement on the trough so as to promote movement therealong of articles carried by the trough when it is in use, characterised in that the vibrator (35) is pneumatically operated and is secured to the trough (6), which is attached to the base (30) through the intermediary of dampers (33) for inhibiting transmission of vibrations from the vibrator (35) to the base (30).

2. A conveyor as claimed in claim 1, wherein the said dampers (33) are of the type comprising substantially solid bodies of resilient material, for example rubber.

3. A conveyor as claimed in claim 1 or 2, wherein the said dampers (33) are mounted on front and rear portions of the mounting base (30).

4. A conveyor as claimed in claim 1, 2 or 3, wherein the said pneumatic vibrator (35) is mounted on a metallic fitting (32) which is secured to the mounting base (30) through the intermediary of the said dampers (33).

5. A conveyor as claimed in claim 4, wherein the said metallic fitting (32) has bent end portions which are secured respectively to the said mounting base (30) through the said rubber dampers (33).

6. A conveyor as claimed in claim 5, wherein the pneumatic vibrator (35) is mounted on one of the bent end portions of the metallic fitting (32).

7. A conveyor as claimed in any preceding claim, wherein said pneumatic vibrator (35) has a cylinder (40) including an air suction port (44) and an air discharge port (46), and a piston (41) slidable in said cylinder, said piston reciprocating within said cylinder repetitively under the force of air supplied through said air suction port when the conveyor is in use.

## Patentansprüche

1. Vibrationsförderer, mit einer Basis (30), die durch Federvorrichtungen (31) auf einem festen Unterteil (20) gehalten ist; einer Zuführungsrinne (6), die derart auf der Basis angebracht ist, daß sie in bezug auf diese eine Vibrationsbewegung ausführen kann; und einem Vibrator zum Übertragen einer derartigen Bewegung auf die Rinne, um bei Betrieb des Vibrators die Bewegung von in der Rinne befindlichen Gegenständen die Rinne entlang zu fördern, dadurch gekennzeichnet, daß der Vibrator (35) pneumatisch betrieben ist und an der Rinne (6) befestigt ist, welche an der Basis (30) unter Zwischenschaltung von Dämpfern (33) angebracht ist, die die Vibrationsübertragung vom Vibrator (35) zur Basis (30) hemmen.

2. Förderer nach Anspruch 1, bei dem die Dämpfer (33) Feststoffdämpfer sind, welche im wesentlichen feste Körper aus einem elastischen Material wie beispielsweise Gummi enthalten.

3. Förderer nach Anspruch 1 oder 2, bei dem die Dämpfer (33) am vorderen und hinteren Teil der Basis (30) angebracht sind.

4. Förderer nach Anspruch 1, 2 oder 3, bei dem der pneumatische Vibrator (35) an einer metallischen Halterung (32) befestigt ist, die unter Zwischenschaltung der Dämpfer (33) auf der Basis (30) angebracht ist.

5. Förderer nach Anspruch 4, bei dem die metallische Halterung (32) gebogene Endteile aufweist, die jeweils über die Gummidämpfer (33) an der Basis (30) angebracht sind.

6. Förderer nach Anspruch 5, bei dem der pneumatische Vibrator (35) an einem der gebogenen Endteile der metallischen Halterung (32) befestigt ist.

7. Förderer nach jedem vorhergehenden Anspruch, bei dem der pneumatische Vibrator (35) einen Zylinder (40) mit einer Luftansaugöffnung (44), einer Luftauslaßöffnung (46) und einen im Zylinder gleitenden Kolben (41) aufweist, wobei sich bei Betrieb des Förderers der Kolben innerhalb des Zylinders unter der Antriebskraft der durch die Luftansaugöffnung zugeführten Luft repetierend hin- und herbewegt.

## Revendications

1. Transporteur à vibration comprenant un socle (30) monté sur une partie fixe (20) par des moyens élastiques (31), une auge d'alimentation (6) montée sur le socle de façon à pouvoir entrer en vibration par rapport à celui-ci, et un vibrateur pouvant imposer ce mouvement vibratoire à l'auge de façon à favoriser un déplacement, le long de cette auge, des produits transportés par l'auge lorsque celle-ci est en service, transporteur caractérisé en ce que le vibrateur (35) est actionné pneumatiquement et qu'il est fixé à l'auge (6) qui est montée sur le socle (30) par l'intermédiaire d'amortisseurs (33) pour empêcher la transmission des vibrations du vibrateur (35) au socle (30).

2. Transporteur selon la revendication 1, caractérisé en ce que les amortisseurs (33) sont du type comprenant des corps essentiellement pleins en matériaux élastiques, par exemple du caoutchouc.

3. Transporteur selon les revendications 1 ou 2, caractérisé en ce que les amortisseurs (33) sont montés sur les parties avant et arrière du socle (30).

4. Transporteur selon les revendications 1, 2 ou 3, caractérisé en ce que le vibrateur pneumatique (35) est monté sur une pièce de montage métallique (32) qui est fixée au socle (30) par l'intermédiaire des amortisseurs (33).

5. Transporteur selon la revendication 4, caractérisé en ce que la pièce de montage métallique (32) comporte des parties d'extrémité coudées qui sont fixées respectivement au socle (30) à travers les amortisseurs (33) en caoutchouc.

6. Transporteur selon la revendication 5, caractérisé en ce que le vibrateur pneumatique (35) est monté sur une des extrêmités coudées de la pièce de montage métallique (32).

7. Transporteur selon l'une revendications précédentes, caractérisé en ce que le vibrateur pneumatique (35) comporte un cylindre (40) comprenant un orifice (44) d'aspiration d'air et un orifice (46) de sortie d'air ainsi qu'un piston (41) coulissant dans le cylindre, le piston se déplaçant en va-et-vient à l'intérieur du cylindre, de façon répétitive sous l'action de l'air fourni à travers l'orifice d'aspiration d'air lorsque le transporteur est en service.

Fig. I

# Fig. 2

# Fig. 3

# Fig . 4